# EUROPÄISCHE PATENTSCHRIFT

(11) **EP 1 118 941 B1**
(45) Veröffentlichungstag und Bekanntmachung des Hinweises auf die Patenterteilung: **02.01.2008**
(21) Anmeldenummer: 00100954.7
(22) Anmeldetag: 18.01.2000
(51) Int. Cl.: G06F 12/14

(54) **Mikroprozessoranordnung und Verfahren zum Betreiben einer Mikroprozessoranordnung**
Microprocessor system and arrangement in order to operate a microprocessor system
Système micro-processeur et méthode pour exploiter un système micro-processeur

(43) Veröffentlichungstag der Anmeldung: 25.07.2001
(73) Patentinhaber: Infineon Technologies AG, 81669 München (DE)
(72) Erfinder: Sedlak, Holger, 85658 Egmating (DE); Gammel, Berndt, 81737 München (DE); Kniffler, Oliver, 81737 München (DE)
(74) Vertreter: Epping - Hermann - Fischer

(56) Entgegenhaltungen:
- EP-A- 0 583 140
- US-A- 5 987 572

## Beschreibung

Die Erfindung betrifft eine Mikroprozessoranordnung mit einer Verarbeitungseinheit und einem Speicher, der zur Ausführung eines Lese- oder Schreibzugriffs mit der Verarbeitungseinheit gekoppelt ist.

Die Erfindung betrifft außerdem ein Verfahren zum Betreiben einer Mikroprozessoranordnung mit einem solchen Speicher.

Mikroprozessoren benötigen einen Speicher, um dauerhaft oder flüchtig zu verarbeitende Daten oder Programme zu speichern. Bei der Abarbeitung des Programms greift der Mikroprozessor auf den Speicher zu, um aktuell benötigte Programmteile oder Daten zu laden. Mikroprozessoren finden unter anderem Anwendung in sicherheitskritischen Systemen, beispielsweise in Chipkarten. Der Mikroprozessor wird dort unter anderem dazu verwendet, um Datenverkehre zu verschlüsseln oder andere sicherheitskritische Anwendungen für den Chipkarteninhaber abzuwickeln. Dabei sind sicherheitskritische Daten und Programme in den flüchtigen und nichtflüchtigen Speichereinheiten des Mikroprozessors gespeichert. Um ein Ausspähen und Sichtbarmachen dieser Informationen zu verhindern, sind solche Daten verschlüsselt gespeichert. Das Verschlüsselungsverfahren ist relativ aufwendig und erfordert entsprechenden Hardware-Aufwand und Rechenzeit während den Lese- und Schreibzugriffen auf diese Speicher.

Die aktuell von der zentralen Verarbeitungs- und Steuereinheit (CPU) des Mikroprozessors zu verarbeitenden Daten werden daher in weiteren Speichern zwischengespeichert, die wesentlich schneller antworten können. Zum einen ist ein Cache-Speicher vorgesehen, in dem aus den langsameren verschlüsselten Speichern auszulesende oder dorthin zu schreibende Daten zwischengespeichert werden. Zum anderen sind Register vorgesehen, in denen aktuelle zu verarbeitende Datenwerte oder Betriebseinstellungen zwischengespeichert werden.

Da bei einer Zugriffsanfrage an den Cache-Speicher oder eines der Register die Informationen möglichst schon im nächsten Arbeitstakt zur Verfügung stehen sollen, wird dort eine Verschlüsselung der zwischengespeicherten Information bisher nicht erwogen. Wenn man herkömmliche Verschlüsselungsverfahren für die Verschlüsselung des Inhalts von Cache-Speichern oder Registern anwenden würde, wäre die Antwortzeit zu groß. Daher werden die Daten in Cache-Speichern und den Arbeitsregistern des Prozessors bisher im Klartext zwischengespeichert. Problematisch ist, daß die Daten durch geeignete Meßmethoden ausgespäht werden könnten.

Das Dokument US-A-5 987 572 Offenbart eine Anordnung gemäss dem Oberbegriff des Anspruchs 1.

Die Aufgabe der Erfindung besteht darin, eine Mikroprozessoranordnung anzugeben, die eine höhere Sicherheit vor einem Ausspähen abgespeicherter Daten aufweist.

Eine weitere Aufgabe der Erfindung besteht darin, ein Verfahren zum Betreiben einer Mikroprozessoranordnung mit einem Speicher anzugeben.

Betreffend die Anordnung wird diese Aufgabe durch eine Mikroprozessoranordnung gelöst, die umfaßt: eine Verarbeitungseinheit; einen Speicher, der mit der Verarbeitungseinheit zur Ausführung eines Lese- oder Schreibzugriffs gekoppelt ist; eine kryptographische Einheit zur Verschlüsselung und Entschlüsselung von in den Speicher geschriebenen oder gelesenen Datenwerten; Mittel zur Bereitstellung eines veränderbaren Schlüssels, wobei die Mittel derart steuerbar sind, daß der Schlüssel geändert wird, wenn im Speicher keine auszulesenden Datenwerte mehr enthalten sind.

Betreffend das Verfahren wird diese Aufgabe durch ein Verfahren zum Betreiben einer Mikroprozessoranordnung gelöst, die eine Verarbeitungseinheit und einen Speicher enthält, der mit der Verarbeitungseinheit zur Ausführung eines Lese- oder Schreibzugriffs gekoppelt ist, bei dem während eines Zugriffs auf den Speicher durch die Mikroprozessoranordnung die Datenwerte gemäß einem Schlüssel ver- oder entschlüsselt werden und der Schlüssel geändert wird, wenn keine auszulesenden Daten im Speicher mehr enthalten sind.

Bei einer Mikroprozessoranordnung gemäß der Erfindung ist im Zugangspfad zu einem Speicher, der mit der Verarbeitungseinheit gekoppelt ist, beispielsweise ein Cache-Speicher oder ein Register, im Unterschied zu bekannten Mikroprozessoranordnungen zusätzlich eine kryptographische Einheit eingefügt. Der Schlüssel, unter dessen Verwendung die Ver- bzw. Entschlüsselung betrieben wird, wird verändert. Damit das Ein- und Auslesen in bzw. aus dem Speicher mit dem gleichen Schlüssel ausgeführt werden kann, erfolgt der Wechsel des Schlüssels nur, wenn im Speicher keine auszulesenden Datenwerte mehr enthalten sind. Wegen des wechselnden Schlüssels kann das Verschlüsselungsverfahren selbst relativ einfach sein. Die Daten sind im Speicher nichtflüchtig gespeichert, so daß auch nach dem Abschalten der Versorgungsspannung keine verwertbaren Informationen mehr vorliegen und wiederholte Ausleseversuche keinen Erfolg haben. Während des Betriebs ist die verfügbare Zeit zum Ausspähen des Schlüssels bis zu einem Schlüsselwechsel gering. Insgesamt bietet die Kombination aus veränderbaren Schlüssel mit einem einfachen Verschlüsselungsverfahren ausreichend hohe Sicherheit vor einem Angriff.

Die Erfindung eignet sich besonders in Verbindung mit einem weiteren, langsameren Speicher, in welchem die Daten mit einer harten, aufwendigen Verschlüsselung gespeichert sind. Die Daten werden zur schellen Bereitstellung an die zentrale Verarbeitungseinheit des Prozessors im erfindungsgemäß beschalteten Speicher zwischengepuffert. Die weiteren, hart verschlüsselten Speicher können nichtflüchtige Speicher wie ROMs oder E²PROMs oder flüchtige RAMs sein. In herkömmlichen Prozessorarchitekturen greift die CPU über einen Bus auf diese Speicher zu. Der Cache-Speicher liegt demgegenüber zwischen Bus und CPU. Bei der Anwendung der Erfindung auf eine Registerbank sind die Register wie herkömmlich direkt an die CPU angeschlossen. Der Cache-Speicher ist dadurch gekennzeichnet, daß bei einer Zugriffsanfrage an einen externen, d.h. nur über den Bus zugänglichen Speicher zuerst überprüft wird, ob ein Datenwert im Cache-Speicher enthalten ist. Ist der Datenwert dort enthalten, wird er aus dem Cache-Speicher und nicht aus dem externen Speicher an den Prozessor ausgegeben. Wenn der nachgefragte Datenwert nicht im Cache-Speicher enthalten ist, wird der Cache-Speicher zuerst mit dem Datenwert und ein geeignetes Umfeld dieses Datenwerts nachgeladen, wobei der angeforderte Datenwert auch an die CPU ausgegeben wird. Der Cache-Speicher enthält hierzu ein Speicherfeld, um das Vorhandensein des angeforderten Datenwerts feststellen zu können. Die Speicherzellen des Speicherzellenfeldes sind statische oder dynamische Speicherzellen. Eine Registerbank ist dadurch gekennzeichnet, daß sie eine Vielzahl von Registern enthält, die von der CPU direkt ansprechbar sind. Die Register stellen beispielsweise Operanden für in der CPU zu verarbeitende logische Verknüpfungen bereit oder Status- und Konfigurationseinstellwerte. Die Registerzellen sind als bistabile Kippstufen oder Flipflops ausgeführt.

Der Schaltungsaufwand für die Verschlüsselung sieht logische Verknüpfungselemente, zweckmäßigerweise Exklusiv-ODER-Gatter, vor, die in die Datenleitungen im Zugriffspfad des Speichers geschaltet sind. Die zu speichernden oder auszulesenden Daten des Speichers werden mit einem Schlüsselwort über die Exklusiv-ODER-Gatter verknüpft. Das Schlüsselwort wird von einem Register bereitgestellt, welches den von Zeit zu Zeit veränderbaren Schlüssel enthält. Die Schlüsselworte werden vorzugsweise zufallsgesteuert erzeugt. Hierzu dient ein Zufallsgenerator, der ausgangsseitig mit dem Schlüsselregister verbunden ist. Der Zufallsgenerator stellt den Schlüssel physikalisch zufällig oder pseudozufällig bereit.

Der Zufallsgenerator wird dann zur Bereitstellung eines neuen Schlüsselworts veranlaßt, wenn im Speicher keine gültigen Daten mehr vorhanden sind. Dies trifft einerseits dann zu, wenn alle in den Speicher eingelesenen Daten bereits wieder ausgelesen sind. Dies trifft andererseits auch dann zu, wenn der Prozessor auf eine andere Anwendung umgeschaltet wird und hierzu neu initialisiert wird. Auf herkömmliche Weise mußte dann der Inhalt des Speichers vollständig gelöscht werden, so daß für die nachfolgende Anwendung keine Daten der vorhergehenden Anwendung mehr verfügbar sind. Bei der Erfindung ist ein Initialisieren des Speichers, indem jede Speicherzelle zurückgesetzt wird, nicht mehr erforderlich. Es genügt vielmehr, nur den Schlüssel zufallsgesteuert zu verändern. Die im Speicher enthaltenen Datenwerte sind dann nicht mehr entschlüsselbar. Ein Rücksetzen jeder einzelnen Speicherzelle ist nicht mehr erforderlich.

Nachfolgend wird die Erfindung anhand des in der Zeichnung dargestellten Ausführungsbeispiels näher erläutert. Einander entsprechende Elemente sind mit gleichen Bezugszeichen versehen. Es zeigen:
- Figur 1: ein Blockschaltbild eines Mikroprozessors gemäß der Erfindung und
- Figur 2: einen Cache-Speicher, der erfindungsrelevante Details zeigt.

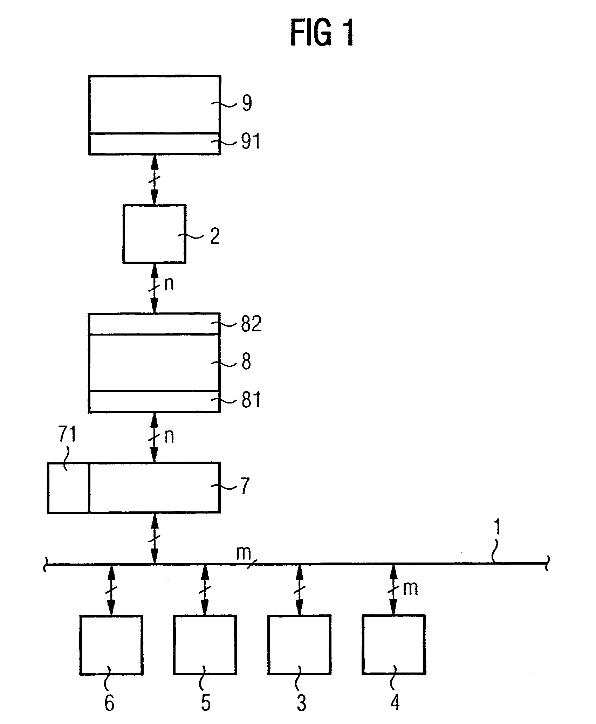

Der Mikroprozessor gemäß Figur 1 umfaßt einen Datenbus 1, über den die verschiedenen Funktionseinheiten des Mikroprozessors miteinander Daten-, Steuerungs- oder Programminformation austauschen. Der Datenbus 1 umfaßt eine Vielzahl von Leitungen zur Übermittlung der Nutz- und Steuerungsinformation. Eine zentrale Verarbeitungseinheit 2 steuert den Programmablauf und führt Berechnungen aus. Daten- und Programminformation sind dauerhaft unveränderbar in einem ROM-Speicher 3 gespeichert oder dauerhaft veränderbar in einem E²PROM 4. Flüchtige Daten werden in einem RAM-Speicher 5 abgelegt. Außerdem ist mindestens eine periphere Einheit 6 vorgesehen um Daten von außen zu empfangen oder nach außen abzugeben. Alle Funktionseinheiten sind auf einem einzigen integrierten Halbleiterchip angeordnet. Die Einheiten 2, ..., 6 sind alle an den Bus 1 angeschlossen und tauschen darüber die zu verarbeitende Information aus. Die Zugriffssteuerung auf den Bus wird von einer Bussteuerungseinheit 7 überwacht.

Die in den Speichern 3, 4, 5 abgelegten Daten sind verschlüsselt. Beim Ausgeben der Datenwerte auf den Bus werden die Daten entschlüsselt und als Klartext weitergeleitet. Hierzu dient eine entsprechende Ver- und Entschlüsselungseinheit 71 (MED - Memory En-/Decryption). Beim Einspeichern von Datenwerten in den RAM-Speicher 5 besorgt die Einheit 71 eine entsprechende Verschlüsselung. Da die in den Speichern 3, 4, 5 enthaltenen Daten längerdauernd flüchtig oder nichtflüchtig zur Verfügung stehen ist das von der MED-Einheit 71 abgearbeitete kryptographische Verfahren entsprechend aufwendig. Speicherzugriffe dauern relativ lange. Alternativ zu der zentralen MED-Einheit 71 kann jedem der Speicher 3, 4, 5 direkt eine kryptographische Einheit zugeordnet sein.

Um Datenzugriffe auf die externen Speicher 3, 4, 5 zu beschleunigen, ist ein Cache-Speicher 8 vorgesehen. Der Speicher 8 liegt im Signalpfad zwischen der Bussteuerung 7 und der CPU 2. Im Cache-Speicher 8 werden die aktuell von der CPU 2 angeforderten Daten und ein geeignetes Umfeld dieser Daten zwischengespeichert. Eine Leseanfrage an einen der Speicher 3, 4, 5 wird derart abgearbeitet, daß zuerst im Cache-Speicher 8 überprüft wird, ob dort die angeforderten Daten enthalten sind. Falls nicht, werden die Daten und das entsprechende Umfeld aus den externen Speichern in den Cache nachgeladen. Wenn die angeforderten Daten im Cache 8 enthalten sind, erübrigt sich das Nachladen.

Der Cache-Speicher 8 ist im Ausführungsbeispiel in einen Befehls-Cache-Speicher und einen Daten-Cache-Speicher aufgeteilt. In ersterem werden Befehlsfolgen des gerade abgearbeiteten Programms zwischengespeichert, in letzterem die zugehörigen Daten. Prinzipiell sind auch andere Strukturen für den Cache-Speicher möglich. Der Cache-Speicher kann auch als gemeinsamer Cache für Befehle und Daten ausgelegt sein (Unified Cache). Im Falle einer assoziativen Cache-Speicher-Architektur ist eine solche Einheit wiederum ist in einen Assoziativspeicher für die Adressen aufgeteilt und den zugehörigen Befehls-/Daten-Speicherteil. Durch Abfrage des Assoziativspeichers wird sehr schnell festgestellt, ob das angeforderte Datum im Cache enthalten ist. Wenn das Datum nicht vorhanden ist (sogenannter Cache-Miss) wird eine Anfrage zum Nachladen an den entsprechenden externen Speicher ausgegeben. Entsprechende Vorgänge laufen beim Schreiben eines Datenwerts zurück in das RAM 5 ab.

Beim Nachladen des Cache-Speichers 8 werden die über den Bus 1 empfangenen Informationen in Klartext durch eine kryptographische Einheit 81 verschlüsselt. Bei einem Schreibvorgang werden durch die Einrichtung 81 die im Cache-Speicher 8 verschlüsselt gespeicherten Daten entschlüsselt. Bei der Übermittlung der im Cache-Speicher 8 verschlüsselt gespeicherten Daten an die CPU 2 werden sie durch eine kryptographische Einheit 82 entschlüsselt. Bei einem Schreibvorgang verschlüsselt die Einheit 82 im Cache-Speicher 8 zwischenzuspeichernde Information. Wie weiter unten noch beschrieben, ist der den kryptographischen Einheiten 81, 82 zugeführte Schlüssel identisch und wird zufallsgesteuert verändert, wenn sich im Cache-Speicher 8 keine gültigen auszulesenden Daten mehr befinden.

Operatoren und Statusinformation für die CPU 2 sind in einer Registerbank 9 gespeichert. Auf eines oder mehrere der in der Registerbank 9 angeordneten Register kann die CPU 2 direkt und unmittelbar zugreifen. Dort gespeicherte Daten werden durch eine kryptographische Einheit 91 beim Zugriff auf eines der Register der Registerbank 9 ver- oder entschlüsselt. Der in den Einheiten 81 und 82 einerseits und der Einheit 91 andererseits verwendete momentane Schlüssel ist zweckmäßiger Weise verschieden.

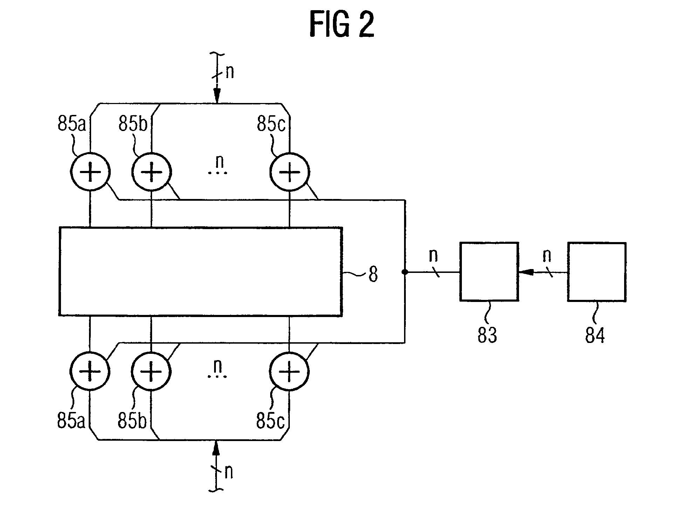

Die kryptographischen Einheiten sind am Beispiel des Cache-Speichers 8 in Figur 2 im Detail dargestellt. Ein Schlüsselregister 83 enthält den momentan verwendeten Schlüssel. Der Schlüssel wird von einem Zufallsgenerator 84 bereitgestellt, welcher das Schlüsselwort physikalisch echt zufällig oder pseudo-zufällig erzeugt. In die Datensignal- oder Bitleitungen, welche die in den Cache-Speicher 8 eingeschriebene oder davon ausgelesene Information führen sind jeweilige Exklusiv-ODER-Gatter 85a, 85b und 85c geschaltet. Jedes der Exklusiv-ODER-Gatter 85 ist außerdem mit einem Ausgang des Registers 83 verbunden. Die Exklusiv-ODER-Gatter 85 liegen sowohl auf der dem Bus 1 zugewandten als auch auf der der CPU 2 zugewandten Seite des Cache-Speichers 8. Beim Einlesen von Daten in den Cache-Speicher 8 erfolgt aufgrund der Exklusiv-ODER-Verknüpfung der Datenwerte mit dem aus dem Register 83 zugeführten Schlüsselwort eine Verschlüsselung. Beim Auslesen erfolgt durch die gleiche Exklusiv-ODER-Verknüpfung mit dem gleichen Schlüsselwort die komplementäre Entschlüsselung. Solange im Cache-Speicher 8 gültige Daten zum Auslesen gespeichert sind, muß das vom Register 83 bereitgestellte Schlüsselwort unverändert gleich bestehen bleiben. Jeder der n Bitleitungen entspricht ein Bit des Schlüsselworts.

Gemäß der Erfindung wird das Schlüsselwort dann geändert, wenn der Cache-Speicher 8 keine gültigen Daten, d.h. solche Daten, die noch auszulesen sind, enthält. Dann wird der Zufallsgenerator 84 aktiviert, um ein zufallsgesteuert erzeugtes neues Schlüsselwort zu berechnen. Es sind keine gültigen Daten im Speicher 8 mehr enthalten, wenn alle dort zwischengespeicherten Datenwerten wieder ausgelesen sind. Des weiteren ist das Schlüsselwort bei einer Initialisierung des Cache-Speichers 8, einem sogenannten Cache-Flush, zu verändern. Ein Cache-Flush erfolgt beispielsweise bei einer Änderung des vom Mikroprozessor abgearbeiteten Programms, wenn die Applikation, d.h. der Anwendungsfall, in welchem der Mikroprozessor eingesetzt wird, wechselt. In diesem Fall kann auch auf einen Cache-Flush und ein dadurch bedingtes vollständiges Initialisieren und Rücksetzen sämtlicher Speicherzellen des Cache-Speichers 8 verzichtet werden, da durch ein Wechseln des Schlüsselworts im Register 83 die Daten ohnehin nicht mehr entschlüsselbar sind.

Die kryptographische Einheit 91 ist entsprechend einer der kryptographischen Einheiten im Zugangspfad an den Cache-Speicher 8 im Detail aufgebaut. Deren Schlüsselregister wird dann mit einem neuen Zufallswert geladen, wenn sämtliche Register der Registerbank 9 keine gültigen auszulesenden Daten mehr enthalten oder neu initialisiert werden müssen.

Durch die Erfindung wird eine erhöhte Sicherheit von einem Ausspähen von temporär gespeicherten Daten erhalten, indem die Daten verschlüsselt gespeichert werden und der Schlüssel von Zeit zu Zeit geändert wird. Auch bei mehrfach gleichem Programmablauf sind die gespeicherten Daten aufgrund unterschiedlicher Schlüssel verschieden. Der vom Mikroprozessor während der Abarbeitung des Programms gezogene Strom, insbesondere die Stromspitzen oder Stromtäler, ist unterschiedlich. Dadurch werden Angriffsverfahren, die eine Auswertung des Stromprofils anwenden, erschwert.

## Patentansprüche

1. Mikroprozessoranordnung, die umfaßt:
- eine Verarbeitungseinheit (2),
- einen Speicher (8, 9), der mit der Verarbeitungseinheit (2) zur Ausführung eines Lese- oder Schreibzugriffs gekoppelt ist,
- eine kryptographische Einheit (81, 82; 91) zur Verschlüsselung und Entschlüsselung von in den Speicher (8; 9) geschriebenen oder gelesenen Datenwerten,
- Mittel (83) zur Bereitstellung eines veränderbaren Schlüssels, **dadurch gekennzeichnet, dass**
- die Mittel (83) derart steuerbar sind, daß der Schlüssel geändert wird, wenn im Speicher (8) keine auszulesenden Datenwerte mehr enthalten sind.

2. Mikroprozessoranordnung nach Anspruch 1,
**gekennzeichnet durch**
einen weiteren Speicher (3, 4, 5), in dem Datenwerte verschlüsselt speicherbar sind, und eine Entschlüsselungseinrichtung (71), **durch** die die Datenwerte des weiteren Speichers (3, 4, 5) beim Auslesen entschlüsselbar sind.

3. Mikroprozessoranordnung nach Anspruch 1 oder 2,
**dadurch gekennzeichnet, daß**
der Speicher ein Cache-Speicher (8) ist.

4. Mikroprozessoranordnung nach Anspruch 3,
**dadurch gekennzeichnet, daß**
der Cache-Speicher (8) eine Zugriffssteuerung enthält, durch die zuerst überprüfbar ist, ob ein Datenwert einer Zugriffsanfrage der Verarbeitungseinheit (2) im Cache-Speicher (8) enthalten sind, so daß dann, wenn die Datenwerte der Zugriffsanfrage im Cache-Speicher (8) enthalten sind, aus dem Cache-Speicher (8) ausgelesen werden.

5. Mikroprozessoranordnung nach 3 oder 4,
**dadurch gekennzeichnet, daß**
ein Bus (1) zur Abwicklung von Datenverkehr vorgesehen ist, daß der Speicher (8) in den Datenpfad zwischen Bus (1) und Verarbeitungseinheit (2) geschaltet ist und daß der weitere Speicher (3, 4, 5) über den Bus (1) mit der Verarbeitungseinheit (2) verbunden ist.

6. Mikroprozessoranordnung nach Anspruch 1 oder 2,
**dadurch gekennzeichnet, daß**
der Speicher ein Register (9) ist, das Registerzellen umfaßt, die als bistabile Kippstufen ausgeführt sind.

7. Mikroprozessoranordnung nach einem der Ansprüche 1 bis 6,
**dadurch gekennzeichnet, daß**
die Mittel zur Bereitstellung des veränderbaren Schlüssels ein Register (83) umfassen und daß die Registerausgänge über logische Verknüpfungselemente (85a, 85b, 85c) mit den Leitungen gekoppelt sind, über die auf Speicherzellen im Speicher (8) zugreifbar ist.

8. Mikroprozessoranordnung nach Anspruch 7,
**gekennzeichnet durch**
einen Zufallsgenerator (84), der mit dem Register (83) zur Einspeisung des Schlüssels gekoppelt ist.

9. Mikroprozessoranordnung nach Anspruch 8,
**dadurch gekennzeichnet, daß**
das Register (83) aus dem Zufallsgenerator (84) dann ladbar ist, wenn der Mikroprozessor zur Abarbeitung einer anderen Anwendung initialisiert wird.

10. Verfahren zum Betreiben einer Mikroprozessoranordnung, die eine Verarbeitungseinheit (2) und einen Speicher (8; 9) enthält, der mit der Verarbeitungseinheit zur Ausführung eines Lese- oder Schreibzugriffs gekoppelt ist, bei dem während eines Zugriffs auf den Speicher (8; 9) durch die Mikroprozessoranordnung die Datenwerte gemäß einem Schlüssel ver- oder entschlüsselt werden und der Schlüssel geändert wird, wenn keine auszulesenden Daten im Speicher (8; 9) mehr enthalten sind.

11. Verfahren zum Betreiben einer Mikroprozessoranordnung nach Anspruch 10,
**dadurch gekennzeichnet, daß**
der Schlüssel zufallsgesteuert geändert wird.

12. Verfahren zum Betreiben einer Mikroprozessoranordnung nach Anspruch 10 oder 11,
**dadurch gekennzeichnet, daß**
der Schlüssel geändert wird, wenn der Speicher (8; 9) vollständig ausgelesen ist.

13. Verfahren zum Betreiben einer Mikroprozessoranordnung nach Anspruch 10 oder 11,
**dadurch gekennzeichnet, daß**
der Schlüssel geändert wird, wenn das Programm, welches von der Mikroprozessoranordnung verarbeitet wird, gewechselt wird.

## Claims

1. Microprocessor arrangement which comprises:
- a processing unit (2),
- a memory (8, 9) which is connected to the processing unit (2) for the execution of a reading or writing access operation,
- a cryptographic unit (81, 82; 91) for encrypting and decrypting data values written or read into the memory (8; 9),
- means (83) for providing a variable key,
**characterized in that**
- it is possible to control the means (83) in such a way that the key is changed if there are no longer any data values to be read out contained in the memory (8).

2. Microprocessor arrangement according to Claim 1, **characterized by** a further memory (3, 4, 5) in which data values can be stored in encrypted form, and a decryption device (71) by means of which the data values of the further memory (3, 4, 5) can be decrypted when they are read out.

3. Microprocessor arrangement according to Claim 1 or 2, **characterized in that** the memory is a cache memory (8).

4. Microprocessor arrangement according to Claim 3, **characterized in that** the cache memory (8) contains an access controller by means of which it is firstly possible to check whether a data value of an access request of the processing unit (2) is contained in the cache memory (8) so that if the data values of the access request are contained in the cache memory (8) they are read out of the cache memory (8).

5. Microprocessor arrangement according to Claim 3 or 4, **characterized in that** a bus (1) is provided for executing data traffic, **in that** the memory (8) is connected into the data path between the bus (1) and processing unit (2), and **in that** the further memory (3, 4, 5) is connected to the processing unit (2) via the bus (1).

6. Microprocessor arrangement according to Claim 1 or 2, **characterized in that** the memory is a register (9) which comprises register cells which are embodied as bistable flip-flops.

7. Microprocessor arrangement according to one of Claims 1 to 6, **characterized in that** the means for providing the variable key comprise a register (83), and **in that** the register outputs are connected via logic operation elements (85a, 85b, 85c) to the lines via which memory cells in the memory (8) can be accessed.

8. Microprocessor arrangement according to Claim 7, **characterized by** a random generator (84) which is connected to the register (83) for feeding in the key.

9. Microprocessor arrangement according to Claim 8, **characterized in that** the register (83) can be loaded from the random generator (84) if the microprocessor is initialized for executing a different application.

10. Method for operating a microprocessor arrangement which contains a processing unit (2) and a memory (8; 9) which is connected to the processing unit for executing a reading or writing access operation, in which, while the memory (8; 9) is being accessed by the microprocessor arrangement, the data values are encrypted or decrypted in accordance with a key, and the key is changed if there is no longer any data to be read out contained in the memory (8; 9).

11. Method for operating a microprocessor arrangement according to Claim 10, **characterized in that** the key is changed in a random-controlled fashion.

12. Method for operating a microprocessor arrangement according to Claim 10 or 11, **characterized in that** the key is changed if the memory (8; 9) is completely read out.

13. Method for operating a microprocessor arrangement according to Claim 10 or 11, **characterized in that** the key is changed if the program which is processed by the microprocessor arrangement is changed.

## Revendications

1. Système microprocesseur qui comprend :
- une unité de traitement (2),
- une mémoire (8, 9) qui est couplée à l'unité de traitement (2) pour la réalisation d'un accès en lecture ou en écriture,
- une unité cryptographique (81, 82 ; 91) pour le cryptage et le décryptage de valeurs de données écrites ou lues dans la mémoire (8 ; 9),
- des moyens (83) pour la fourniture d'une clé modifiable,
**caractérisé par le fait que**
- les moyens (83) peuvent être commandés de telle sorte que la clé est modifiée lorsqu'il n'y a plus de valeurs de données à lire dans la mémoire (8).

2. Système microprocesseur selon la revendication 1,
**caractérisé par** une autre mémoire (3, 4, 5) dans laquelle des valeurs de données peuvent être mémorisées cryptées et par un dispositif de décryptage (71) par lequel les valeurs de données de l'autre mémoire (3, 4, 5) peuvent être décryptées lors de la lecture.

3. Système microprocesseur selon la revendication 1 ou 2,
**caractérisé par le fait que** la mémoire est une mémoire cache (8).

4. Système microprocesseur selon la revendication 3,
**caractérisé par le fait que** la mémoire cache (8) contient une commande d'accès par laquelle on peut d'abord vérifier si une valeur de données d'une demande d'accès de l'unité de traitement (2) est contenue ou non dans la mémoire cache (8) de telle sorte que, si la valeur de données de la demande d'accès est contenue dans la mémoire cache (8), la lecture s'effectue dans la mémoire cache (8).

5. Système microprocesseur selon la revendication 3 ou 4,
**caractérisé par le fait qu'**un bus (1) est prévu pour le développement du trafic de données, que la mémoire (8) est branchée dans le trajet de données entre le bus (1) et l'unité de traitement (2) et que l'autre mémoire (3, 4, 5) est reliée à l'unité de traitement (2) par l'intermédiaire du bus (1).

6. Système microprocesseur selon la revendication 1 ou 2,
**caractérisé par le fait que** la mémoire est un registre (9) qui comprend des cellules de registre qui sont réalisées comme des bascules bistables.

7. Système microprocesseur selon l'une des revendications 1 à 6,
**caractérisé par le fait que** les moyens pour la fourniture de la clé modifiable comprennent un registre (83) et que les sorties de registre sont couplées par l'intermédiaire d'éléments de combinaison logique (85a, 85b, 85c) aux lignes par l'intermédiaire desquelles on peut accéder à des cellules de mémoire dans la mémoire (8).

8. Système microprocesseur selon la revendication 7,
**caractérisé par** un générateur aléatoire (84) qui est couplé au registre (83) pour l'introduction de la clé.

9. Système microprocesseur selon la revendication 8,
**caractérisé par le fait que** le registre (83) peut être chargé à partir du générateur aléatoire (84) lorsque le microprocesseur est initialisé pour le traitement d'une autre application.

10. Procédé d'exploitation d'un système microprocesseur qui contient une unité de traitement (2) et une mémoire (8 ; 9) qui est couplée à l'unité de traitement pour la réalisation d'un accès en lecture ou en écriture, procédé dans lequel, pendant un accès à la mémoire (8 ; 9) par le système microprocesseur, les valeurs de données sont cryptées ou décryptées selon une clé et dans lequel la clé est modifiée lorsqu'il n'y a plus de données à lire dans la mémoire (8 ; 9).

11. Procédé d'exploitation d'un système microprocesseur selon la revendication 10,
**caractérisé par le fait que** la clé est modifiée par une commande aléatoire.

12. Procédé d'exploitation d'un système microprocesseur selon la revendication 10 ou 11,
**caractérisé par le fait que** la clé est modifiée lorsque la mémoire (8 ; 9) est complètement lue.

13. Procédé d'exploitation d'un système microprocesseur selon la revendication 10 ou 11,
**caractérisé par le fait que** la clé est modifiée lorsque l'on change le programme qui est traité par le système microprocesseur.
